# FASCICULE DE BREVET EUROPEEN

(11) **EP 0 858 172 B1**
(45) Date de publication et mention de la délivrance du brevet: **24.09.2003**
(21) Numéro de dépôt: 98400276.6
(22) Date de dépôt: 09.02.1998
(51) Int. Cl.: H04B 1/38, H04M 1/72, H01M 2/10

(54) **Bloc d'alimentation d'un dispositif portatif, du type permettant l'utilisation de différents types d'alimentation, et dispositif portatif correspondant**
Tragbares Gerät, und Batteriegehäuse des tragbaren Gerätes für Gebrauch von verschiedenen Batterietypen konstruiert
Portable apparatus, and power pack for the portable apparatus capable of using different types of battery types

(30) Priorité: 10.02.1997 FR 9701478
(43) Date de publication de la demande: 12.08.1998
(73) Titulaire: ALCATEL, 75008 Paris (FR)
(72) Inventeur: Bourel, Christian, 95150 Taverny (FR); Bertrand, Robert, 91390 Morsang-sur-Orge (FR)
(74) Mandataire: El Manouni, Josiane

(56) Documents cités:
- EP-A- 0 712 226
- US-A- 5 015 546

## Description

Le domaine de l'invention est celui de l'alimentation électrique des dispositifs portatifs. Par dispositifs portatifs, on entend notamment, mais non exclusivement, les terminaux de radiocommunication (terminaux de type GSM par exemple).

Plus précisément, l'invention concerne un bloc (ou trappe ou encore boîtier) d'alimentation du type destiné à être monté de façon amovible sur le corps d'un dispositif portatif. En d'autres termes, l'invention concerne la partie (amovible) du dispositif portatif qui contient les moyens d'alimentation électrique.

On connaît, dans l'état de la technique, différents types de bloc d'alimentation.

Le document EP 0 712 226 propose, comme alternative à un système d'alimentation basé sur des batteries rechargeables, un bloc d'alimentation qui peut recevoir un jeu de piles standard.

Le document US 5 015 546 décrit, d'autre part, un bloc d'alimentation qui peut recevoir plusieurs types de moyens d'alimentation.

Dans le cas le plus simple, le bloc d'alimentation comprend une cavité dans laquelle est placée de façon fixe une batterie rechargeable. Cette batterie rechargeable est généralement appelée "pack-batterie" ou "soft-pack". Le corps du dispositif comprend un premier connecteur d'alimentation et la batterie rechargeable comporte un second connecteur. Lorsque le bloc d'alimentation est monté sur le corps du dispositif, les premier et second connecteurs coopèrent ensemble, de façon que le corps du dispositif (qui contient notamment les moyens d'émission/réception, dans le cas d'un terminal de radiocommunication) soit alimenté par la batterie.

Lorsque la batterie est déchargée, l'utilisateur dispose de deux possibilités. S'il n'a pas un besoin immédiat de son dispositif portatif, il peut laisser le bloc d'alimentation sur le corps du dispositif, et placer l'ensemble sur un support de charge, grâce à des plots prévus à cet effet sur le corps du dispositif portatif (sur le talon en général). Dans ce cas, la batterie est rechargée via le corps du dispositif portatif.

En revanche, si l'usager désire disposer immédiatement de son dispositif portatif, il peut mettre en place un nouveau bloc d'alimentation, dont la batterie est chargée. La batterie du bloc d'alimentation précédemment en place peut par ailleurs être rechargée directement grâce à un appareil de charge approprié (et non pas, contrairement au cas précédent, via le corps du dispositif portatif).

L'inconvénient majeur de la solution précitée est que l'usager peut se retrouver dans l'impossibilité d'utiliser son dispositif portatif. En effet, s'il ne dispose que d'une seule batterie et si celle-ci est déchargée, alors il doit attendre qu'elle soit rechargée avant de pouvoir utiliser à nouveau son dispositif portatif. Par ailleurs, s'il dispose de plusieurs batteries, il se peut également que, par mégarde, toutes soient déchargées simultanément. Ceci est par exemple le cas lorsque l'utilisateur a oublié, après avoir mis en place un nouveau bloc d'alimentation, de recharger la batterie du bloc d'alimentation précédement en place.

Afin d'éviter une telle situation très gênante pour l'utilisateur, il a été proposé un second type de bloc d'alimentation. Le principe en est que le bloc d'alimentation peut recevoir deux types de moyens d'alimentation, à savoir soit une batterie rechargeable (qui n'est donc plus fixée définitivement dans la cavité du bloc d'alimentation), soit un jeu de piles. Ainsi, lorsqu'il ne dispose plus d'aucune batterie chargée, l'utilisateur peut utiliser des piles standard en lieu et place de la batterie. En général, une batterie rechargeable est remplacée par trois piles standard de type AA. L'achat de piles pouvant se faire facilement dans n'importe quel commerce, l'utilisateur dispose en permanence d'un dispositif portatif opérationnel.

Comme expliqué ci-dessus, pour que le corps du dispositif puisse être alimenté par la batterie, la batterie comporte un second connecteur destiné à coopérer avec le premier connecteur du corps du dispositif portatif. Par conséquent, lorsqu'on utilise le jeu de piles, il convient de disposer là aussi d'un connecteur assurant l'interface électrique entre le jeu de piles et le premier connecteur du corps du dispositif portatif.

La solution actuellement proposée consiste à prévoir une pièce additionnelle amovible, assurant cet interface électrique entre le jeu de piles et le premier connecteur du corps du dispositif portatif. Cette pièce amovible comporte un troisième connecteur destiné à coopérer avec le premier connecteur.

Dans l'état de la technique actuel, la pièce additionnelle amovible se présente sous la forme d'un boîtier plastique indépendant, que l'utilisateur place dans le bloc d'alimentation uniquement lorsqu'il désire utiliser le jeu de piles.

Cette solution n'est pas très satisfaisante puisqu'elle oblige l'utilisateur à avoir en permanence avec lui la pièce additionnelle. Il y a donc une forte probabilité pour que l'utilisateur n'ai pas la pièce additionnelle sous la main au moment où il en a effectivement besoin.

De plus, dans sa forme actuelle, la pièce additionnelle présente des dimensions telles qu'elle ne peut recevoir que des piles de petites tailles. Par conséquent, l'autonomie de fonctionnement du dispositif portatif lorsque ce sont les piles qui sont utilisées est obligatoirement réduite.

L'invention a notamment pour objectif de pallier ces différents inconvénients de l'état de la technique.

Plus précisément, l'un des objectifs de la présente invention est de fournir un bloc d'alimentation d'un dispositif portatif, du type permettant l'utilisation de différentes alimentations (à savoir notamment une batterie rechargeable et un jeu de piles), et qui ne nécessite pas de stockage par l'utilisateur lui-même d'une pièce additionnelle.

L'invention a également pour objectif de fournir un tel bloc d'alimentation qui permette d'augmenter l'autonomie de fonctionnement du dispositif portatif avec le jeu de piles.

Un autre objectif de l'invention est de fournir une pièce additionnelle dont le coût et la complexité sont réduits par rapport aux pièces additionnelle connues (et discutées ci-dessus).

Un objectif complémentaire de l'invention est de fournir un tel bloc d'alimentation qui puisse être utilisé très facilement avec un jeu de piles standard.

Ces différents objectifs, ainsi que d'autres qui apparaîtront par la suite, sont atteints selon l'invention à l'aide d'un bloc d'alimentation d'un dispositif portatif, du type destiné à être monté de façon amovible sur le corps dudit dispositif portatif, ledit corps comprenant un premier connecteur d'alimentation, ledit bloc d'alimentation comprenant une cavité pouvant recevoir deux types de moyens d'alimentation, à savoir soit une batterie rechargeable, soit un jeu d'au moins une pile,
ladite batterie rechargeable comportant un second connecteur, destiné à coopérer avec ledit premier connecteur lorsque ladite batterie rechargeable est placée dans ladite cavité,
ledit bloc d'alimentation comprenant en outre une pièce amovible assurant l'interface électrique entre ledit jeu d'au moins une pile et ledit premier connecteur, lorsque ledit jeu d'au moins une pile est placé dans ladite cavité, ladite pièce amovible comportant un troisième connecteur destiné à coopérer avec ledit premier connecteur,
ledit bloc d'alimenbtation étant caractérisé en ce que ladite pièce amovible peut prendre, à l'intérieur de ladite cavité, les deux positions suivantes
- une position passive - lorsque la batterie rechargeable est placée dans la cavité - dans laquelle elle n'assure aucune fonction d'interface électrique vis-à-vis dudit premier connecteur ;
- une position active - lorsque le jeu d'au moins une pile est placé dans la cavité - dans laquelle elle assure l'interface électrique entre ledit jeu d'au moins une pile et ledit premier connecteur.

Le principe général de l'invention consiste donc à avoir la pièce amovible en permanence dans la cavité du bloc d'alimentation, et non pas uniquement lorsque c'est le jeu de piles qui est utilisé. Ainsi, l'utilisateur est sûr de disposer à tout moment de la pièce amovible puisque, même lorsque c'est la batterie rechargeable qui est utilisée, la pièce amovible est stockée dans la cavité du bloc d'alimentation (sans toutefois assurer dans ce cas une quelconque fonction d'interface électrique).

De façon avantageuse, ledit jeu d'au moins une pile présente un encombrement sensiblement identique à celui de ladite batterie.

Ainsi, en permettant l'utilisation de piles de mêmes dimensions que les éléments de batterie, on optimise l'autonomie de fonctionnement du dispositif portatif lorsque celui-ci est utilisé avec le jeu de piles.

Avantageusement, ladite pièce amovible comprend des moyens de maintien mécanique, dans ladite position passive, de ladite batterie rechargeable dans ladite cavité.

Ainsi, dans la position passive, la pièce amovible n'est "passive" qu'électriquement puisqu'elle est "active" mécaniquement, en ce sens qu'elle contribue à l'immobilisation de la batterie rechargeable dans la cavité du bloc d'alimentation.

De façon préférentielle, lesdits moyens de maintien mécanique comprennent au moins une lame formant ressort et
- venant appuyer contre ladite batterie rechargeable, lorsque ladite pièce amovible est dans ladite position passive,
- assurant un contact électrique avec un pôle d'une pile dudit jeu, lorsque ladite pièce amovible est dans ladite position active.

Ainsi, au moins un même élément de la pièce amovible (à savoir une lame) assure deux fonctions, l'une de contact électrique (pièce amovible dans la position active) et l'autre de maintien mécanique (pièce amovible dans la position passive).

Préférentiellement, ladite pièce amovible présente une largeur sensiblement inférieure ou égale à celle de ladite cavité, et la paroi de ladite cavité comprend:
- une première paire de rainures latérales, placées de chaque côté de la cavité, et dans lesquelles peuvent glisser les extrémités de ladite pièce amovible, lorsque celle-ci est placée dans ladite position passive ;
- des premiers moyens d'encliquetage, placés sensiblement à mi-distance des deux côtés de la cavité, et destinés à coopérer avec des seconds moyens d'encliquetage dont est pourvue ladite pièce amovible sensiblement en son centre, lorsque celle-ci est placée dans ladite position passive.

Avantageusement, ladite pièce amovible présente une largeur sensiblement inférieure ou égale à celle de ladite cavité, et la paroi de ladite cavité comprend:
- une seconde paire de rainures latérales, placées de chaque côté de la cavité, et dans lesquelles peuvent glisser les extrémités de ladite pièce amovible, lorsque celle-ci est placée dans ladite position active ;
- des troisièmes moyens d'encliquetage, placés sensiblement à mi-distance des deux côtés de la cavité, et destinés à coopérer avec des quatrièmes moyens d'encliquetage dont est pourvue ladite pièce amovible sensiblement en son centre, lorsque celle-ci est placée dans ladite position active.

De façon avantageuse, si ledit jeu comprend au moins deux piles, lesdits troisièmes et quatrièmes moyens d'encliquetage assurent également, en coopération, une liaison électrique contribuant à la liaison électrique des piles entre elles.

L'invention concerne également un dispositif portatif comprenant un bloc d'alimentation tel que précité, et notamment un terminal portatif de radiocommunication.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente une vue de côté d'un exemple de terminal de radiocommunication, avec son bloc d'alimentation ;
- la figure 2 présente une vue en perspective d'un mode de réalisation particulier d'un bloc d'alimentation selon l'invention, sans la pièce amovible ;
- la figure 3 présente une vue en perspective d'un mode de réalisation particulier de la pièce amovible selon l'invention, telle qu'orientée en position passive ;
- la figure 4 présente une vue en perspective d'un mode de réalisation particulier de la pièce amovible selon l'invention, telle qu'orientée en position active ;
- la figure 5 présente le bloc d'alimentation de la figure 2, avec la pièce amovible en position passive (comme présentée sur la figure 3) ;
- la figure 6 reprend la figure 5 avec en outre la batterie rechargeable en place;
- la figure 7 présente le bloc d'alimentation de la figure 2, avec la pièce amovible en position active (comme présentée sur la figure 4) ; et
- la figure 8 reprend la figure 7 avec en outre le jeu de piles en place.

L'invention concerne donc un bloc d'alimentation d'un dispositif portatif, ce bloc d'alimentation pouvant recevoir deux types de moyens d'alimentation, à savoir soit une batterie rechargeable, soit un jeu de piles.

Le dispositif portatif décrit ci-dessous est un terminal de radiocommunication, généralement plus simplement appelé "téléphone portatif'. Il s'agit par exemple d'un téléphone portatif de type GSM. Il est clair toutefois que l'invention peut s'appliquer à n'importe quel type de dispositif portatif comprenant un bloc d'alimentation.

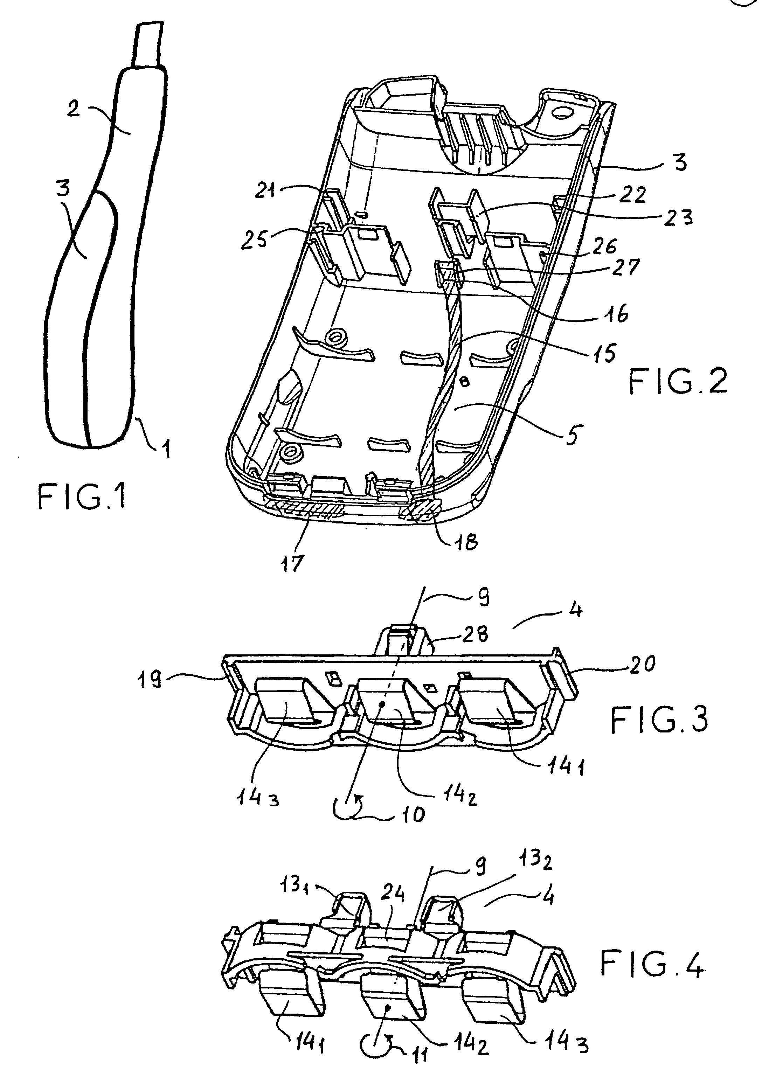

Comme présenté sur la figure 1, de façon classique un téléphone portatif 1 comprend un corps 2 sur lequel est monté de façon amovible un bloc d'alimentation 3. Il est à noter que le bloc d'alimentation 3 est parfois également appelé trappe d'alimentation ou encore boîtier d'alimentation.

Egalement de façon classique, afin de recevoir l'énergie électrique fournie par le bloc d'alimentation 3, le corps 2 comprend un premier connecteur d'alimentation (non représenté), qui est destiné à coopérer avec un autre connecteur présent à cet effet dans le bloc d'alimentation 3. Comme on le verra par la suite, dans le cas de l'invention, cet autre connecteur présent dans le bloc d'alimentation est soit celui (dit second connecteur) que comporte la batterie rechargeable, soit celui (dit troisième connecteur) que comporte la pièce amovible.

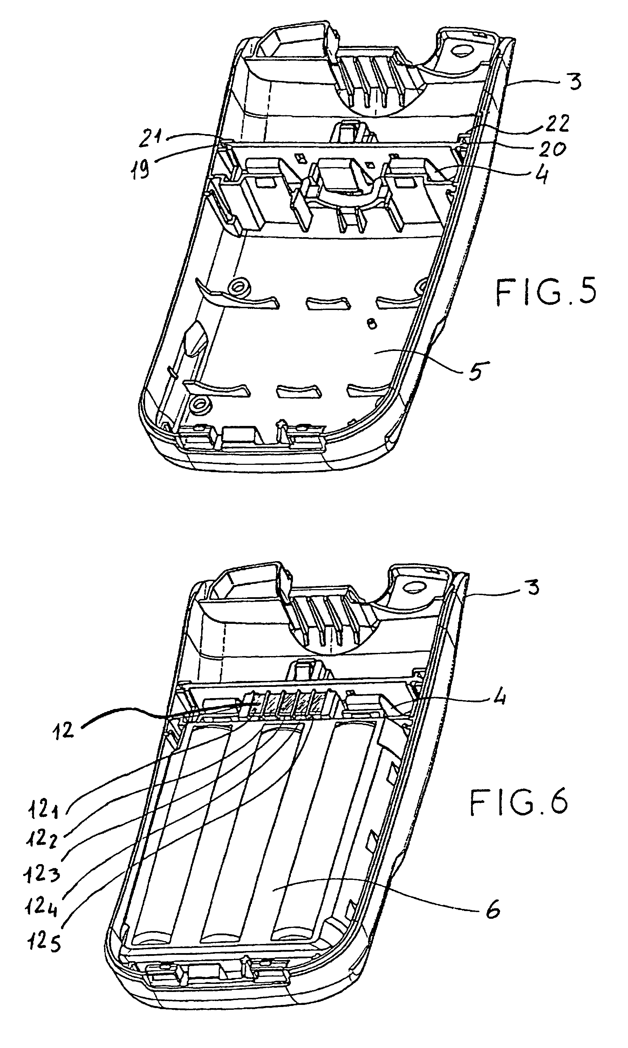

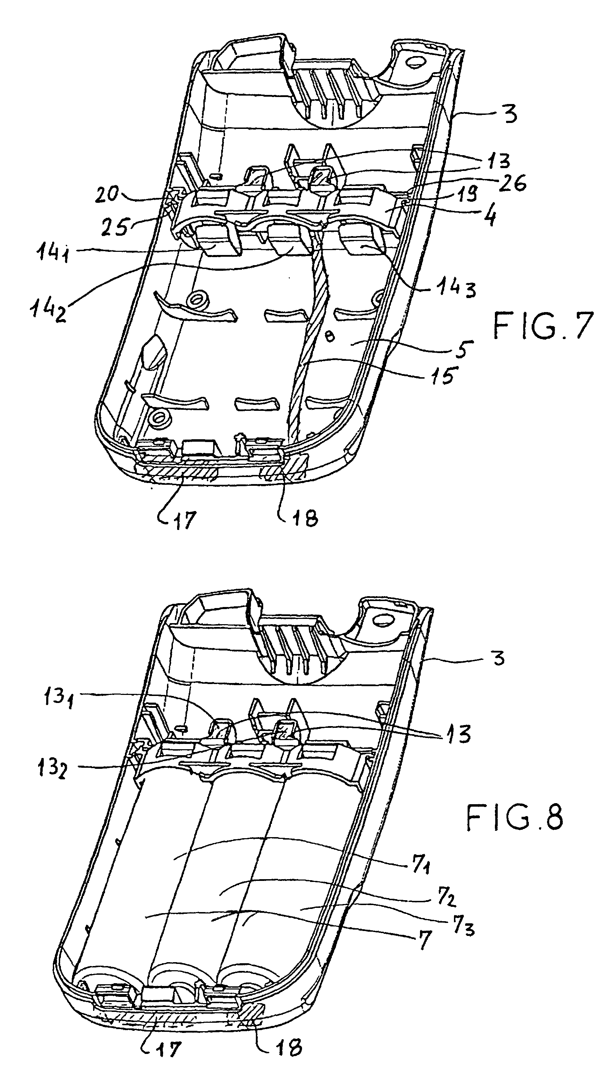

La figure 2 présente une vue en perspective d'un mode de réalisation particulier du bloc d'alimentation 3 selon l'invention, sans la pièce amovible 4 (qui est présentée séparément sur les figures 3 et 4). Le bloc d'alimentation 3 comprend une cavité 5 destinée à recevoir soit la batterie rechargeable 6 (cf figure 6), soit le jeu de piles (cf figure 8).

Selon l'invention, le bloc d'alimentation 3 comprend en outre une pièce amovible 4 qui reste en permanence dans la cavité 5 précitée. Pour cela, la pièce amovible 4 peut prendre les deux positions suivantes
- une position passive, lorsque la batterie rechargeable 6 est placée dans la cavité 5 ;
- une position active, lorsque le jeu de piles 7 est placé dans la cavité 5.

Dans la position passive, la pièce amovible 4 n'assure aucune fonction d'interface électrique vis-à-vis du premier connecteur du corps 2. Cette position passive est illustrée sur la figure 3 (où la pièce amovible est présentée seule), sur la figure 5 (où la pièce amovible est présentée une fois mise en place dans la cavité 5 du bloc d'alimentation 3) et sur la figure 6 (où, par rapport à la figure 5, la batterie 6 a également été mise en place).

Lorsque la batterie 6 est utilisée (c'est-à-dire lorsque la pièce amovible 4 est dans la position passive), c'est le second connecteur 12 que comporte cette batterie 6 (cf fig.6) qui coopère avec le premier connecteur (non représenté) du corps 2. Ce second connecteur 12 comprend cinq plots 12₁ à 12₅, à savoir deux plots d'extrémité 12₁, 12₅ pour l'alimentation du corps 2, et trois plots centraux 12₂ à 12₄ utilisés pour la commande en température lors de la recharge de la batterie 6.

Dans la position active, la pièce amovible 4 assure l'interface électrique entre le jeu de piles 7 et le premier connecteur du corps 2. Cette position active est illustrée sur la figure 4 (où la pièce amovible est présentée seule), sur la figure 7 (où la pièce amovible est présentée une fois mise en place dans la cavité 5 du bloc d'alimentation 3) et sur la figure 8 (où, par rapport à la figure 7, les piles 7 ont également été mises en place).

Lorsque les piles 7 sont utilisées (c'est-à-dire lorsque la pièce amovible 4 est dans la position active), c'est le troisième connecteur 13 que comporte cette pièce amovible (cf fig.7 et 8) qui coopère avec le premier connecteur (non représenté) du corps 2. Ce troisième connecteur 13 ne comprend que deux plots 13₁, 13₂, à savoir ceux correspondant aux deux plots d'extrémité 12₁, 12₅ du second connecteur 12 de la batterie 6 (utilisés pour l'alimentation du corps 2).

La pièce amovible 4 comprend des lames 14₁ à 14₃ destinées chacune à assurer un contact électrique avec un pôle d'une pile 7, lorsque la pièce amovible 4 est en position active. Chacun des deux plots d'extrémité 13₁, 13₅ est relié à une des deux lames de contact d'extrémité 14₁, 14₃. Par ailleurs, lorsque la pièce amovible est placée dans la position active, la lame de contact centrale 14₂ vient en contact, via un pic 16 (cf fig.2) avec une bande conductrice 15 réalisée sur le fond de la cavité 5. Enfin, le bas de la cavité 5 comprend deux plaques conductrices 17, 18 (représentées en pointillés sur les figures 2, 7 et 8. du fait qu'elles se trouvent à l'intérieur de la cavité et donc non visible normalement sur ces figures).

Ainsi, dans l'exemple présenté, le montage en série des trois piles 7₁ à 7₃ avec les deux plot d'extrémité 13₁, 13₂ est le suivant :
- le plot d'extrémité gauche 13₁ est en contact, via la lame de contact gauche 14₁, avec le pôle + de la première pile 7₁;
- le pôle - de la première pile 7 est en contact avec le pôle + de la seconde pile 7₂, via la plaque conductrice de gauche 17 ;
- le pôle - de la seconde pile 7₂ est en contact, via successivement la lame de contact centrale 14₂, la bande conductrice 15 et la plaque conductrice droite 18, avec le pôle + de la troisième pile 7₃ ;
- le pôle - de la troisième pile 7₃ est en contact, via la lame de contact droite 14₃, avec le plot d'extrémité droite 13₂.

Comme cela apparaît clairement sur les figures (et notamment sur les figures 3 et 4), dans le mode de réalisation présenté, entre les deux positions active et passive, la pièce amovible 4 est simplement retournée sur elle-même. En d'autres, elle subit une rotation de 180° autour d'un axe 9 perpendiculaire à son plan principal. Pour le passage de la position passive (cf fig.3) à la position active (cf fig.4), cette rotation est référencée 10 sur la figure 3. Inversement, pour le passage de la position active (cf fig.4) à la position passive (cf fig.3), cette rotation est référencée 11 sur la figure 4.

Le jeu de piles 7 est ici constitué de trois piles standard de type AA. En fait, chaque pile est de la taille d'un des éléments de la batterie 6. Il important de noter que le jeu de pile 7 présente ici le même encombrement que la batterie 6.

On présente maintenant les opérations successives que l'utilisateur doit effectuer pour passer d'un fonctionnement avec la batterie 6 (cf fig.6) à un fonctionnement avec les piles 7 (cf fig.8).

Tout d'abord, l'utilisateur retire la batterie rechargeable 8 de la cavité 5 (cf fig.5). La pièce amovible 4 est en position passive (cf fig.3 et 5). Il enlève la pièce amovible 4 de la cavité 5 (cf fig.2). Il retourne la pièce amovible 4 puis la replace dans la cavité 5 (cf fig.4 et 7). La pièce amovible 4 est maintenant en position active. Enfin, il met en place les piles 7 dans la cavité 5 (cf fig.8).

Optionnellement, lorsque la pièce amovible est en position passive, la lame de contact centrale 142 constitue un moyen de maintien mécanique de la batterie rechargeable 8 à l'intérieur de la cavité 5, en venant appuyer contre cette batterie 8.

On présente maintenant un mode de réalisation particulier de la fixation de la pièce amovible 4 à l'intérieur de la cavité 5, dans les positions passive et active. On notera tout d'abord que la pièce amovible 4 présente une largeur sensiblement inférieure ou égale à celle de la cavité 5, de façon à pouvoir être placée transversalement à l'intérieur de la cavité 5, dans la position passive (cf fig.5 et 6) comme dans la position active (cf fig.7 et 8).

Lorsque la pièce amovible 4 est placée dans la position passive (cf fig.5 et 6), les extrémités latérales 19, 20 de la pièce amovible 4 viennent glisser dans une première paire de rainures latérales 21, 22, placées de chaque côté de la cavité 5. En outre, le fond de la cavité 5 comprend des premiers moyens 23 d'encliquetage (cf fig.2), placés sensiblement à mi-distance des deux côtés de la cavité 5, et destinés à coopérer avec des seconds moyens 24 d'encliquetage (visibles uniquement sur la figure 4, du fait qu'ils sont situés dessous sur la figure 3) dont est pourvue la pièce amovible 4 sensiblement en son centre.

Lorsque la pièce amovible 4 est placée dans la position active (cf fig.7 et 8), les extrémités latérales 20,19 de la pièce amovible 4 (qui sont inversées par rapport à la position passive) viennent glisser dans une seconde paire de rainures latérales 25, 26, placées de chaque côté de la cavité 5. En outre, le fond de la cavité 5 comprend des troisièmes moyens 27 d'encliquetage (cf fig.2), placés sensiblement à mi-distance des deux côtés de la cavité 5, et destinés à coopérer avec des quatrièmes moyens 28 d'encliquetage (visibles uniquement sur la figure 3, du fait qu'ils sont situés dessous sur la figure 4) dont est pourvue la pièce amovible 4 sensiblement en son centre.

Comme cela apparaît clairement sur la figure 2, la seconde paire de rainures latérales 25, 26 et les troisièmes moyens 27 d'encliquetage sont légèrement décalés par rapport à la première paire de rainures latérales 21, 22 et aux premiers moyens 23 d'encliquetage respectivement.

On notera également que dans ce mode de réalisation, les troisièmes moyens 27 d'encliquetage comprennent le pic 16 précité, permettant à la lame de contact centrale 14₂ de venir en contact avec la bande conductrice 15, lorsque la pièce amovible 4 est placée dans la position active.

## Revendications

1. Bloc d'alimentation (3) d'un dispositif portatif (1), du type destiné à être monté de façon amovible sur le corps (2) dudit dispositif portatif, ledit corps (2) comprenant un premier connecteur d'alimentation, ledit bloc d'alimentation (3) comprenant une cavité (5) pouvant recevoir deux types de moyens d'alimentation, à savoir soit une batterie rechargeable (8), soit un jeu d'au moins une pile (7),
ladite batterie rechargeable comportant un second connecteur (12), destiné à coopérer avec ledit premier connecteur lorsque ladite batterie rechargeable (8) est placée dans ladite cavité (5),
ledit bloc d'alimentation comprenant en outre une pièce amovible assurant l'interface électrique entre ledit jeu d'au moins une pile (7) et ledit premier connecteur, lorsque ledit jeu d'au moins une pile (7) est placé dans ladite cavité (5), ladite pièce amovible comportant un troisième connecteur destiné à coopérer avec ledit premier connecteur,
**caractérisé en ce que** ladite pièce amovible (4) peut prendre, à l'intérieur de ladite cavité (5), les deux positions suivantes :
- une position passive (cf fig.3, 5 et 6) - lorsque la batterie rechargeable (8) est placée dans la cavité (5) - dans laquelle elle n'assure aucune fonction d'interface électrique vis-à-vis dudit premier connecteur ;
- une position active (cf fig.4, 7 et 8) - lorsque le jeu d'au moins une pile (7) est placé dans la cavité (5) - dans laquelle elle assure l'interface électrique entre ledit jeu d'au moins une pile et ledit premier connecteur.

2. Bloc d'alimentation selon la revendication 1, **caractérisé en ce que** ledit jeu d'au moins une pile (7) présente un encombrement sensiblement identique à celui de ladite batterie (8).

3. Bloc d'alimentation selon l'une quelconque des revendications 1 et 2, **caractérisé en ce que** ladite pièce amovible (4) comprend des moyens (14₂) de maintien mécanique, dans ladite position passive, de ladite batterie rechargeable (8) dans ladite cavité (5).

4. Bloc d'alimentation selon la revendication 3, **caractérisé en ce que** lesdits moyens de maintien mécanique comprennent au moins une lame formant ressort (14₂) et
- venant appuyer contre ladite batterie rechargeable (8), lorsque ladite pièce amovible (4) est dans ladite position passive,
- assurant un contact électrique avec un pôle d'une pile (7₂) dudit jeu, lorsque ladite pièce amovible (4) est dans ladite position active.

5. Bloc d'alimentation selon l'une quelconque des revendications 1 à 4, **caractérisé en ce que** ladite pièce amovible (4) présente une largeur sensiblement inférieure ou égale à celle de ladite cavité (5),
et **en ce que** la paroi de ladite cavité comprend
- une première paire de rainures latérales (21, 22), placées de chaque côté de la cavité (5), et dans lesquelles peuvent glisser les extrémités (19, 20) de ladite pièce amovible (4), lorsque celle-ci est placée dans ladite position passive ;
- des premiers moyens (23) d'encliquetage, placés sensiblement à mi-distance des deux côtés de la cavité, et destinés à coopérer avec des seconds moyens (24) d'encliquetage dont est pourvue ladite pièce amovible (4) sensiblement en son centre, lorsque celle-ci est placée dans ladite position passive.

6. Bloc d'alimentation selon l'une quelconque des revendications 1 à 5, **caractérisé en ce que** ladite pièce amovible présente une largeur sensiblement inférieure ou égale à celle de ladite cavité,
et **en ce que** la paroi de ladite cavité comprend
- une seconde paire de rainures latérales (25, 26), placées de chaque côté de la cavité, et dans lesquelles peuvent glisser les extrémités de ladite pièce amovible, lorsque celle-ci est placée dans ladite position active ;
- des troisièmes moyens (27) d'encliquetage, placés sensiblement à mi-distance des deux côtés de la cavité, et destinés à coopérer avec des quatrièmes moyens (28) d'encliquetage dont est pourvue ladite pièce amovible sensiblement en son centre, lorsque celle-ci est placée dans ladite position active.

7. Bloc d'alimentation selon la revendication 6, ledit jeu comprenant au moins deux piles (7₁ à 7₃), **caractérisé en ce que** lesdits troisièmes et quatrièmes moyens (27, 28) d'encliquetage assurent également, en coopération, une liaison électrique contribuant à la liaison électrique des piles entre elles.

8. Dispositif portatif (1), **caractérisé en ce qu'**il comprend un bloc d'alimentation (3) selon l'une quelconque des revendications 1 à 7.

9. Dispositif selon la revendication 8, **caractérisé en ce qu'**il s'agit d'un terminal portatif de radiocommunication.

## Patentansprüche

1. Batteriegehäuse (3) eines tragbares Gerätes (1), das auf herausnehmbare Art und Weise an dem Gehäuse (2) des genannten, tragbaren Gerätes montiert wird, wobei das genannte Gehäuse (2) einen ersten Batteriestecker besitzt und das genannte Batteriegehäuse (3) eine Vertiefung (5) besitzt, die zwei Arten von Batterieelementen aufnehmen kann, nämlich entweder eine wiederaufladbare Batterie (8) oder einen Satz mit mindestens einer Batterie (7),
wobei die genannte wiederaufladbare Batterie einen zweiten Stecker (12) besitzt, der mit dem ersten Stecker zusammenwirken soll, wenn die genannte wiederaufladbare Batterie (8) in die genannte Vertiefung (5) eingesetzt wird,
wobei das genannte Batteriegehäuse außerdem ein herausnehmbares Teil besitzt, das die elektrische Schnittstelle zwischen dem genannten Satz mindestens einer Batterie (7) und dem genannten ersten Stecker darstellt, wenn der genannte Satz mindestens einer Batterie (7) in die genannte Vertiefung (5) eingesetzt wird, wobei das genannte herausnehmbare Teil einen dritten Stecker besitzt, der mit dem ersten Stecker zusammenwirkt,
**dadurch gekennzeichnet, dass** das genannte herausnehmbare Teil (4) im Innern der genannten Vertiefung (5) die beiden folgenden Positionen einnehmen kann:
- eine passive Position (siehe Abbildungen 3, 5 und 6) - wenn die wiederaufladbare Batterie (8) in die Vertiefung (5) eingesetzt wird - in der sie gegenüber dem genannten ersten Stecker keine Funktion einer elektrischen Schnittstelle wahrnimmt;
- eine aktive Position (siehe Abbildungen 4, 7 und 8) - wenn der Satz mindestens einer Batterie (7) in die Vertiefung (5) eingesetzt wird - in der sie die elektrische Schnittstelle zwischen dem genannten Satz mindestens einer Batterie und dem genannten ersten Stecker darstellt.

2. Batteriegehäuse nach Anspruch 1, **dadurch gekennzeichnet, dass** der genannte Satz mindestens einer Batterie (7) einen Platzbedarf besitzt, der im wesentlichen mit dem der genannten Batterie (8) identisch ist.

3. Batteriegehäuse nach einem der vorhergehenden Ansprüche. **dadurch gekennzeichnet. dass** das genannte herausnehmbare Teil (4) in der passiven Position Elemente (14₂) zur mechanischen Halterung der genannten wiederaufladbaren Batterie (8) in der genannten Vertiefung (5) besitzt.

4. Batteriegehäuse nach Anspruch 3, **dadurch gekennzeichnet, dass** die genannten Elemente zur mechanischen Halterung mindestens eine Kontaktzunge besitzen, die eine Feder (14₂) bildet und:
- sich gegen die genannte wiederaufladbare Batterie (8) abstützt, wenn sich das genannte herausnehmbare Teil (4) in der genannten passiven Position befindet,
- einen elektrischen Kontakt mit einem Pol einer Batterie (7₂) des genannten Satzes herstellt, wenn sich das genannte herausnehmbare Teil (4) in der genannten aktiven Position befindet.

5. Batteriegehäuse nach einem der vorhergehenden Ansprüche, **dadurch gekennzeichnet, dass** das genannte herausnehmbare Teil (4) im wesentlichen schmaler oder genauso breit ist wie die genannte Vertiefung (5),
und **dadurch gekennzeichnet, dass** die Wand der genannten Vertiefung folgendes aufweist:
- ein erstes Paar seitlicher Rillen (21, 22), die an beiden Seiten der Vertiefung (5) angeordnet sind, und in die die Enden (19, 20) des genannten herausnehmbaren Teils (4) gleiten können, wenn dieses in die passive Position gebracht wird ;
- erste Einrastelemente (23), die sich im wesentlichen auf halbem Abstand zu den beiden Seiten der Vertiefung befinden und mit zweiten Einrastelementen (24) zusammenwirken sollen, mit denen das herausnehmbare Teil (4) im wesentlichen in seiner Mitte ausgestattet ist, wenn es in die genannte passive Position gebracht wird.

6. Batteriegehäuse nach einem der vorhergehenden Ansprüche, **dadurch gekennzeichnet, dass** das genannte herausnehmbare Teil im wesentlichen schmaler oder genauso breit ist wie die genannte Vertiefung,
und **dadurch gekennzeichnet, dass** die Wand der genannten Vertiefung folgendes aufweist:
- ein zweites Paar seitlicher Rillen (25, 26). die an beiden Seiten der Vertiefung angeordnet sind, und in die die Enden des genannten herausnehmbaren Teils gleiten können, wenn dieses in die aktive Position gebracht wird
- dritte Einrastelemente (27), die sich im wesentlichen auf halbem Abstand zu den beiden Seiten der Vertiefung befinden und mit vierten Einrastelementen (28) zusammenwirken sollen, mit denen das herausnehmbare Teil (4) im wesentlichen in seiner Mitte ausgestattet ist, wenn es in die genannte aktive Position gebracht wird.

7. Batteriegehäuse nach Anspruch 6, wobei der genannte Satz mindestens zwei Batterien (7₁ bis 7₃) besitzt, **dadurch gekennzeichnet, dass** die genannten dritten und vierten Einrastelemente (27, 28) in Zusammenwirkung ebenfalls eine elektrische Verbindung sicherstellen, die die elektrische Verbindung der Batterien untereinander ergänzt.

8. Tragbares Gerät (1), **dadurch gekennzeichnet, dass** es ein Batteriegehäuse (3) nach einem der vorhergehenden Ansprüche besitzt.

9. Gerät nach Anspruch 8, **dadurch gekennzeichnet, dass** es sich um ein tragbares Funk-Endgerät handelt.

## Claims

1. A power supply unit (3) for portable apparatus (1), the unit being of the type designed to be removably mounted on the body (2) of said portable apparatus, said body (2) being provided with a first power supply connector, said power supply unit (3) being provided with a cavity (5) that is suitable for receiving two types of power source, namely either a battery of rechargeable cells (6) or a set of at least one non-rechargeable cell (7);
said battery of rechargeable cells being provided with a second connector (12) designed to co-operate with said first connector when said battery of rechargeable cells (6) is placed in said cavity (5);
said power supply unit further including a removable part serving as an electrical interface between said set of at least one non-rechargeable cell (7) and said first connector, when said set of at least one non-rechargeable cell (7) is placed in said cavity (5), said removable part being provided with a third connector designed to co-operate with said first connector;
said power supply unit being **characterized in that** said removable part (4) can take up the following two positions inside said cavity (5):
a passive position (cf Figures 3, 5, and 6) when the battery of rechargeable cells (6) is placed in the cavity (5), in which position the part does not serve as an electrical interface relative to said first connector; and
an active position (cf Figures 4, 7, and 8) when the set of at least one non-rechargeable cell (7) is placed in the cavity (5), in which position the part serves as an electrical interface between said set of at least one non-rechargeable cell and said first connector.

2. A power supply unit according to claim 1, **characterized in that** said set of at least one non-rechargeable cell (7) has an overall size that is substantially identical to the overall size of said battery of rechargeable cells (6).

3. A power supply unit according to claim 1 or 2, **characterized in that** said removable part (4) is provided with mechanical holding means (14₂) for holding said battery of rechargeable cells (6) in said cavity (5) when said part is in said passive position.

4. A power supply unit according to claim 3, **characterized in that** said mechanical holding means comprise at least one spring-forming blade (14₂) that:
presses against said battery of rechargeable cells (6) when said removable part (4) is in said passive position; and
provides electrical contact with a pole of a non-rechargeable cell (7₂) of said set when said removable part (4) is in the active position.

5. A power supply unit according to any one of claims 1 to 4, **characterized in that** said removable part (4) has a width less than or equal to the width of said cavity (5);
and **in that** the wall of said cavity is provided with:
a first pair of side grooves (21, 22) placed on either side of the cavity (5) and in which the ends (19, 20) of said removable part (4) can slide when said part is placed in said passive position; and
first snap-fastening means (23) placed substantially midway between the two sides of the cavity and serving, when said part is placed in said active position, to co-operate with second snap-fastening means (24) provided on said removable part (4) substantially at the center thereof.

6. A power supply unit according to any one of claims 1 to 5, **characterized in that** said removable part has a width less than or equal to the width of said cavity;
and **in that** the wall of said cavity is provided with:
a second pair of side grooves (25, 26) placed on either side of the cavity, and in which the ends of said removable part can slide when said part is placed in said active position; and
third snap-fastening means (27) placed substantially midway between the two sides of the cavity, and serving, when said part is placed in said active position, to co-operate with fourth snap-fastening means (28) provided on said removable part substantially at its center.

7. A power supply unit according to claim 6, said set comprising at least two non-rechargeable cells (7₁ to 7₃), said power supply unit being **characterized in that** said third and fourth snap-fastening means (27, 28) also co-operate to provide an electrical link contributing to the electrical link between the non-rechargeable cells.

8. Portable apparatus (1), **characterized in that** it includes a power supply unit (3) according to any one of claims 1 to 7.

9. Apparatus according to claim 8, **characterized in that** it is constituted by a portable radiocommunications terminal.
